# EUROPEAN PATENT APPLICATION

(11) **EP 4 394 906 A1**
(43) Date of publication of application: **03.07.2024**
(21) Application number: 22307065.7
(22) Date of filing: 30.12.2022
(51) Int. Cl.: H01M 4/04, H01M 4/505, H01M 4/525, H01M 4/583, H01M 4/62

(54) **NEW PROCESS FOR MANUFACTURING A DRY ELECTRODE PREPARATION**

(71) Applicant: Automotive Cells Company SE, 92300 Levallois Perret (FR); SAFT, 92300 Levallois-Perret (FR)
(72) Inventor: Ben Ali, Imed Eddine, 33100 Bordeaux (FR); Zier, Martin, 33100 Le Bouscat (FR); Cornil, Clément, 33460 Castres-Gironde (FR)
(74) Representative: Alatis

(57) **Abstract**

The invention relates to a dry one-pot method for producing an electrode materials blend comprising the fibrillization of a mixture of at least one electrode active material, optionally a powder of at least one conductive material, a powder of at least one binder, and optionally a powder of at least one co-binder.

## Description

### TECHNICAL FIELD OF THE INVENTION

The invention belongs to the dry battery electrode manufacturing field. It particularly relates to a single step preparation of a dry blend of components to be used in the manufacturing of lithium-ion batteries with gelled or liquid electrolyte or solid-state batteries.

### TECHNICAL BACKGROUND OF THE INVENTION

European patent application publication EP 3 444 869 A1 discloses a method for manufacturing electrode for lithium secondary battery including the steps of dry mixing a conductive material and an electrode active material, dry mixing the resultant mixture with a binder to obtain an electrode mixture powder and applying the electrode mixture powder to at least one surface of a current collector.

European patent application publication EP 3 467 918 A1 discloses a process for manufacturing an electrode for use in a battery, comprising dry mixing carbon particles and dry binder, defibrillating the dry binder to create a matrix within which to support the dry particles as a dry material; and compacting the dry material to form a self-supporting dry film.

International publication WO 2019/222110 A1 discloses a method of fabricating a dry electrode film used to a lithium-ion battery comprising mixing an active material with a porous carbon material to form a dry active material mixture, mixing the dry active material with a dry binder to form a dry electrode film mixture and calendaring the dry electrode film mixture to form a dry electrode film with a binder loading of at most about 2 wt.%.

International publication WO 2020/148410 A1 discloses a method for manufacturing a dry electrode for an energy storage device wherein separate mixtures of dry blended particles and of dry fibrillated particles are provided to respective containers to form a dry film.

These existing solutions however include multi-steps preparation processes, which can be cumbersome and energy consuming. In some extents, the produced powder is not homogeneous enough. That is the reason why the inventors intended to develop a new process which overcome the herein abovementioned disadvantages.

### DESCRIPTION OF THE INVENTION

According to a first embodiment, the invention therefore relates to a dry one-pot method for producing an electrode materials blend, said dry one-pot method comprising the following steps:
- A step 1) of providing the following powders:
   - A powder of at least one electrode active material,
   - Optionally, a powder of at least one conductive material,
   - A powder of at least one binder, and
   - Optionally a powder of at least one co-binder;
- A step 2) of dry mixing together all the powders provided at step 1), to form a primary mixture of all these powders;
- A step 3) of dry blending said primary mixture resulting from step 2), for a sufficient time for the resulting mixture to be converted in the expected electrode materials blend as a sandy pasty product; and
- An optional step 4) of dry blending said sandy pasty electrode materials blend resulting from step 3), for a sufficient time to be progressively converted in the expected electrode materials blend as a powders blend.

In the above definition of the invention, the term: "one pot", must be understood as meaning: "in a single container", in which all the steps of the above so-called one pot method are implemented. The term: "dry one-pot method", means that the said one-pot method is implemented in a solvent free manner.

In the definition of step 2) of the method as defined above, the following sentence: "A step 2) of dry mixing together all the powders provided at step 1), to form a primary mixture of all these powders", means that all the powdery materials which are needed to implement the method are firstly mixed together, contrarily to the methods according the state of the art, wherein the binder and optionally the co-binder are added in a further step to a first mix of the electrode active material and of the conductive material.

According to a particular embodiment of the invention, all the steps 2 to 4 of the dry one-pot method as defined above, are implemented in one unique rotative tumbler blender equipped with rotative high shear blades. Such a blender is commercially available; an example of such a blender is the IBC blender commercialized by Matcon.

The drum mixer can be coupled to a computer operating with an appropriate software to manage the smooth running of each of the steps of the above method.

In the context of said particular embodiment of the said above one pot method, the speeds of rotation of the mixer bowl, which runs at around 5 to 20 rounds per minute (rpm) and of the shearing blades which run at around 1.000 to 3.000 rpm, are constant during step 2) and 3) of said method.

In the above definition of the invention, the assessment of the powdery nature of the electrode materials blend resulting from step 4) and of the sandy pasty nature of the electrode materials blend resulting from step 3) can be carried out either visually on samples taken or automatically thanks to an appropriate software coupled with corresponding sensors such as a torque sensor, a particle size distribution (PSD) sensor or a temperature sensor.

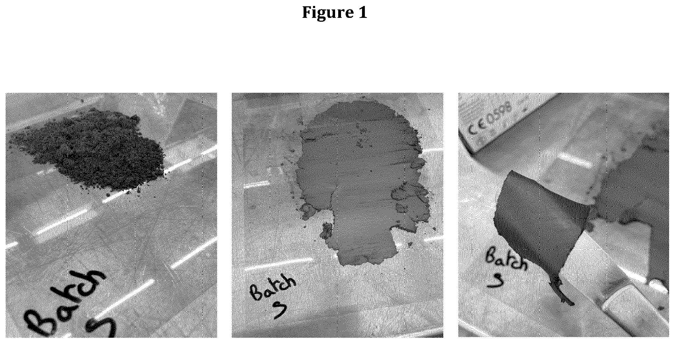

During step 3) of the above defined method, the temperature inside the mixer bowl progressively increases such as to reach between 50°C à 100°C and to induce the fibrillization of said primary mixture resulting from step 2), during around 15 to 30 minutes depending on the materials which are used. This progressive increase of the temperature is only caused by mechanical frictions which naturally occurred during the blending process. It is not generated by any additional heating device. The photographies of Figure 1 are those of an electrode materials fibrillated sandy pasty blend obtained at the end of step 3 of the above defined method.

When the electrode materials blend as a sandy pasty product is obtained, the process can be stopped and said sandy pasty product used as such.

Once the fibrillization step is stopped and after that the temperature inside the mixer bowl has sufficiently decreased, the mixing can however continue until, as the temperature gradually decreases inside the mixer bowl, said sandy pasty electrode materials blend resulting from step 3), is totally converted in the expected powdery blend of electrode materials.

According to a more particular embodiment, step 4) of the method as defined above comprises the following successive steps:
- A step 4a) during which the rotations of the mixer bowl and of the shearing blades are stopped until that, after having progressively decreased from the fibrillization temperature, the temperature inside the mixer bowl reaches a temperature T₀ between 20°C à 25°C; and
- A step 4b) during which the rotations of the mixer bowl and of the shearing blades are firstly restarted at said temperature T₀ and then stopped again when the temperature inside the mixer bowl reaches a temperature T₁ of at most 50°C and preferably of at most 35°C, to obtain said expected electrode materials blend as a powders blend.

When said herein above defined dry one-pot method is implemented to prepare a mixture of a cathode materials blend, the said at least one cathode active material is mainly chosen from the group consisting of Li[Ni_{(1-x-y-z)}CoₓM¹_{y}M²_{z}]O₂ compounds, wherein M¹ and M² independently represents Al, Mg or Mn, the sum is strictly less than 1 and strictly greater than 0.5 [0.5<(1-x-y-z)<1]; examples of such compounds are Li[Ni_{0.6}Co_{0.2}Mn_{0.2}]O₂ (NMC 622), Li[Ni_{0.6}Co_{0.1}Mn_{0.3}]O₂ (NMC 631), Li[Ni_{0.8}Co_{0.1}Mn_{0.1}]O₂ (NMC 811), Li[Ni_{0.9}Co_{0.05}Mn_{0.05}]O₂ (NMC Ni90), Li[Ni_{0.82}Co_{0.11}Mn_{0.07}]O₂ (NMC Ni82), or Li[Ni_{0.81}Co_{0.15}Al_{0.04}]O₂. Said cathode active material is mixed with at least one conductive material, mainly chosen from the group consisting of graphite, carbon black, ketjen black, carbon nanotubes (CNTs) or a combination of two or more of them; said at least one binder is mainly chosen from the group consisting of fluorinated polymers, polyethylene or cellulose fibbers; example of binder for cathodes are PFTE, PVDF binders commercialized as Kynar^{™} binders such as Kynar^{™} HSV 1810.

When said hereinabove defined dry one-pot method is implemented to prepare a mixture of an anode blend powder; said at least one active material such as graphite and mixtures thereof, porous carbon, silicon and silicon compounds (Si, SiOx, Si-C), Lithium-Titanate (LTO); said anode active material is optionally mixed with at least one optional conductive material mainly chosen from the group consisting of such as carbon black, CNTs and mixtures thereof; said at least one binder containing elements mainly chosen from the group consisting of PTFE, fluorinated polymers (such as PVDF binders commercialized as Kynar^{™} binders such as Kynar^{™} HSV 1810), polyethylene oxide (PEO), PE, PP, Polyethylene or cellulose fibres; and carboxymethylcellulose (CMC, such as commercialized Licity^{™} binders)) .

According another particular embodiment of the invention as defined above, the mass ratio between the conductive material and the electrode active material is greater than 0 and less than or equal to 1/9, such as less than or equal to 1/19 and more particularly less than or equal to 1/39; and the primary mixture resulting from step 2) contains from 0.5 wt. % to 10 wt.%, preferably from 1.5 wt.% to 5 wt.% of said powder of said least one binder alone or in combined with said optional co-binder.

The hereinabove defined dry one-pot method is simple and allows energy and costs savings. The powder produced has an improved quality and the method minimizes the risk of pollution.

## Claims

1. A Dry one-pot method for producing an electrode materials blend, said dry one-pot method comprising the following steps:
- A step 1) of providing the following powders:
- A powder of at least one electrode active material,
- Optionally, a powder of at least one conductive material,
- A powder of at least one binder, and
- Optionally a powder of at least one co-binder;
- A step 2) of dry mixing together all the powders provided at step 1), to form a primary mixture of all these powders;
- A step 3) of dry blending said primary mixture resulting from step 2), for a sufficient time for the resulting mixture to be converted in the expected electrode materials blend as a sandy pasty product; and
- An optional step 4) of dry blending said sandy pasty electrode materials blend resulting from step 3), for a sufficient time to be progressively converted in the expected electrode materials blend as a powders blend.

2. A dry one-pot method according to claim 1, wherein all the steps 2) to 4) are implemented in one unique rotative tumbler blender equipped with rotative high shear blades.

3. A dry one-pot method according to claim 2, wherein, the speeds of rotation of both the mixer vessel and the shearing blades, are constant during steps 2) and 3).

4. A dry one-pot method according anyone of claims 1 to 3, wherein step 4) comprises the following successive steps:
- A step 4a) during which the rotations of the mixer bowl and of the shearing blades are stopped until that, after having progressively decreased from the fibrillization temperature, the temperature inside the mixer bowl reaches a temperature T₀ between 20°C à 25°C; and
- A step 4b) during which the rotations of the mixer bowl and of the shearing blades are firstly restarted at said temperature T₀ and then stopped again when the temperature inside the mixer bowl reaches a temperature T₁ of at most 50°C and preferably of at most 35°C, to obtain said expected electrode materials blend as a powders blend.

5. Dry one-pot method according to anyone of claims 1 to 4, wherein the mass ratio between the conductive material and the electrode active material is greater than 0 and less than orequal to 1/9, such as less than orequal to 1/19 and more particularly less than or equal to 1/39 ; and the primary mixture resulting from step 2) contains from 0.5 wt. % to 10 wt.%, preferably from 1.5 wt.% to 5 wt.% of said powder of said least one binder alone or in combined with said optional co-binder.
